# EUROPEAN PATENT SPECIFICATION

(11) **EP 0 402 473 B1**
(45) Date of publication and mention of the grant of the patent: **11.05.1994**
(21) Application number: 89911894.7
(22) Date of filing: 31.10.1989
(51) Int. Cl.: G02B 1/10, B23B 9/00, C03C 17/25, C03C 17/32, C09D 183/04, C09D 7/12

(54) **ANTIREFLECTION ARTICLES, PROCESS FOR THEIR PRODUCTION AND COATING COMPOSITION**
ANTIREFLEXIONSGEGENSTÄNDE, HERSTELLUNGSVERFAHREN UND BESCHICHTUNGSZUSAMMENSETZUNGEN
ARTICLES ANTIREFLET, PROCEDE DE PRODUCTION ET PREPARATION SERVANT DE REVETEMENT

(30) Priority: 31.10.1988 JP 275092/88; 31.10.1988 JP 275093/88
(43) Date of publication of application: 19.12.1990
(73) Proprietor: SUMITOMO CEMENT CO. LTD., Chiyoda-ku Tokyo 101 (JP)
(72) Inventor: SHIODA, Yuji, Tokyo 178 (JP); TAKAHASHI, Kenji, Chiba 281 (JP); SHIMIZU, Joji, Chiba 280 (JP)
(74) Representative: Stuart, Ian Alexander
(86) International application number: JP8901125
(87) International publication number: WO9005315

(56) References cited:
- EP-A- 0 278 060
- DE-A- 3 701 654
- JP-A- 6 092 850
- JP-A- 6 385 701
- JP-A-57 168 922
- JP-A-60 221 702
- JP-A-63 223 701
- JP-A-63 247 702
- JP-A-63 258 963
- PATENT ABSTRACTS OF JAPAN vol. 7, no. 96 (P-193)(1241) April 22, 1983& JP-A-58 23 001 (NIHON ITA GLASS K.K. ) February 10, 1983

## Description

### TECHNICAL FIELD

The present invention relates to a glass or plastic article having a reflection-preventive coating, a process for the preparation thereof, and a reflection-preventive coating composition.

The reflection-preventive coating composition of the present invention is coated on a TV Braun tube, a front glass sheet for a picture, a showcase glass sheet, a spectacle lens, a plastic sheet, a plastic lens or the like, and the formed coating prevents a reflection of visible rays from a glass or plastic article and effectively prevents the appearance of a virtual image due to such reflection.

### BACKGROUND ART

In solid articles of transparent inorganic glass or plastics, various problems occur due to surface reflection. For example, a fluorescent lamp or outdoor scene reflected on a TV Braun tube makes it difficult to see a TV picture. Furthermore, rays reflected from the surface of a front glass sheet for a picture or a glass sheet of a showcase render the picture or goods obscure. Moreover, rays reflected from the surface of a spectacle lens reduce the quantity of light transmitted through the spectacle lens.

As the conventional means for forming a reflection-preventive coating, there are known a method by which a film of MgF₂ is formed by vacuum deposition and is then baked, and a method in which a titanium-containing organic compound and a silicon-containing organic compound are hydrolyzed to form a multi-layer coating composed of TiO₂ and SiO₂ films.

The method of forming a vacuum deposition film of MgF₂ has a problem such that a large article cannot be coated because of restrictions placed on the vacuum deposition equipment. Furthermore, the MgF₂ film has a problem in that the adhesive force is small and the film has an insufficient hardness and scratch resistance, and therefore, baking must be carried out when the MgF₂ film is applied to glass articles. Further, baking cannot be carried out when the MgF₂ film in applied to a plastic article, and thus a coating having a practical utility cannot be obtained. In addition, a very high quality technique is required for obtaining a uniform coating thickness by the vacuum deposition, and each time a size or shape of an article to be subjected to the vacuum deposition is changed, the vacuum deposition conditions and apparatus must be adjusted, to obtain optimum results. The film obtained by the hydrolysis of organic metal compounds is inferior to the MgF₂ film from the viewpoint of preventing reflection.

### DISCLOSURE OF THE INVENTION

A primary object of the present invention is to provide a reflection-preventive coating composition which gives a coating film having an excellent reflection-preventing effect and from which such a coating film can be industrially advantageously prepared.

Another object of the present invention is to provide a process for forming a reflection-preventive film on a glass article or plastic article by using this coating composition.

In accordance with one aspect of the present invention, there is provided a reflection-preventive coating composition comprising 1 part by weight of MgF₂ having an average particle diameter not larger than 500 angstroms, 0.5 to 1.5 parts by weight of a tetraalkoxysilane, 0.1 to 1.0 part by weight of water, and 30 to 50 parts by weight of ethanol, wherein the pH value of the composition is adjusted to 1 to 4.

In accordance with another aspect of the present invention, there is provided a reflection-preventive coating composition comprising 50 to 2 parts by weight of a solid component comprising, based on the solid component, 5 to 50% by weight of an organic resin binder and 95 to 50% by weight of MgF₂ particles having an average particle diameter not larger than 500 angstroms and 50 to 98 parts by weight of an organic solvent capable of dissolving the binder therein.

In accordance with still another aspect of the present invention, there are provided a process comprising coating a reflection-preventive coating composition as set forth above on a glass or plastic article, and a glass or plastic article obtained according to this process.

### BEST MODE FOR CARRYING OUT THE INVENTION

The reflection-preventive coating composition of the present invention comprises fine particles of MgF₂ having an average particle diameter not larger than 500 angstroms, preferably an average particle diameter of 400 to 10 angstroms. Since the reflection-preventive film should cancel both reflected light on the front surface of the film and reflected light on the back surface of the film by making the phases thereof opposite to each other, preferably the thickness of the film is 1/4 of the wavelength of visible light, that is, about 0-1 µm (about 1000 angstroms). If the average particle diameter of the MgF₂ fine particles in the film exceeds 500 angstroms, the film thickness exceeds 0.1 µm in particle-overlapped portions and the particles project on the film surface, with the result that the smoothness is poor and haze occurs, to thereby lower the transparency of the coated article. To smooth the surface of the coating film, preferably the particle diameter is not larger than 1/5 of the thickness of the film, and therefore, the average particle diameter of the MgF₂ fine particles is most preferably 200 to 50 angstroms.

In the coating composition comprising the MgF₂ particles and the tetraalkoxysilane, a tendency is observed that, where the size of the MgF₂ particles is large and exceeds the range specified in the present invention, at a low content of the MgF₂ particles (i.e., at a high content of the tetraalkoxysilane), the strength of the film is constant, and at a high content of the MgF₂ particles, the strength of the film is reduced. Surprisingly, it was found that, when the MgF₂ fine particles have an average particle diameter not larger than 500 angstroms, which are used in the present invention, the strength of the film is high at a high content of the MgF₂ particles (i.e., a low content of the tetraalkoxysilane). To obtain a film having a high strength, the mixing ratio between the MgF₂ fine particles and the tetraalkoxysilane should be such that the amount of the tetraalkoxysilane is 0.5 to 1.5 parts by weight, preferably 0.7 to 1.0 part by weight, per part by weight of the MgF₂ fine particles.

The above-mentioned fine particles of MgF₂ can be prepared, for example, by plasma evapotranspiration and precipitation in air.

The first type of the reflection-preventive coating composition of the present invention comprises a tetraalkoxysilane. A tetraalkoxysilane comprising an alkoxy group having 1 to 4 carbon atoms, such as tetramethoxysilane, tetraethoxysilane, tetrapropoxysilane or tetrabutoxysilane, is preferably used as the tetraalkoxysilane.

If at least one compound selected from alkyltrialkoxysilanes and dialkyldialkoxysilanes is incorporated in an amount of 0.05 to 0.5 part by weight per part by weight of MgF₂ in addition to the above-mentioned tetraalkoxysilane, the strength of the film is further improved. Among these compounds, those having 1 to 4 carbon atoms in each of the alkyl and alkoxy groups are preferably used.

The first type of the reflection-preventive coating composition of the present invention comprise, as the solvent component, 0.1 to 1.0 part by weight, preferably 0.25 to 0.50 part by weight, of water and 30 to 50 parts by weight of a monohydric alcohol having 1 to 4 carbon atoms, per port by weight of MgF₂. Ethanol is especially preferably used as the monohydric alcohol. The pH value of the coating composition is adjusted to 1 to 4 by adding a pH adjusting agent such as hydrochloric acid.

The amounts incorporated of water and ethanol and the pH value are important. If the amount of water is too large, the film is whitened or the storage stability of the liquid composition is lowered. If the amount of water is too small, the adhesion and scratch resistance of the film are poor. If the amount of the monohydric alcohol is too small, the storage stability of the liquid composition is poor and an uneven film is often formed. If the amount of the monohydric alcohol is too large, the required number of the coated layers must be increased and if drying is not completely performed after every coating, peeling of the film readily occurs. If the pH value is too high, the storage stability of the liquid composition is poor and an uneven film is often formed, and the adhesion of the film to the substrate is poor.

The second type of the reflection-preventive coating composition of the present invention comprises an organic resin binder and an organic solvent. For a coated article to maintain a beautiful appearance for a long time, the strength of the coating film must be high. If the amount of the organic resin binder exceeds 50% by weight (the amount of MgF₂ is smaller than 50% by weight), the strength is very low. Therefore, the amount of the organic resin binder is controlled to a level not larger than 50% by weight based on the sum of the organic resin binder and MgF₂. If the amount of MgF₂ is at least 50% by weight, the strength is high, the strength is further increased with an increase of the amount of MgF₂ , and the strength is at a highest level when the amount of MgF₂ is 80 to 85% by weight. If the amount of MgF₂ is further increased, the strength is reduced, and if the amount Of MgF₂ exceeds 95% by weight, the strength of the film becomes lower than the allowable level. Accordingly, in the second type of the reflection-preventive coating composition of the present invention, the amounts of the organic resin binder and MgF₂ are adjusted to S to 50% by weight and 95 to 50% by weight, respectively, based on the sum of the organic resin binder and MgF₂.

Any transparent resin can be used as the organic resin binder, without particular limitation, and an appropriate resin is selected from polyester resins, acrylic resins, vinyl resins, polycarbonate resins, and polyolefin resins according to the kind of an article to be coated.

A coating composition is prepared by adding an organic solvent to the organic resin binder and MgF₂. The kind and amount of the solvent are not particularly critical, and are appropriately determined according to the organic resin binder-dissolving capacity while taking the boiling point and viscosity suitable for the coating process into consideration. In general, the amount of the solvent is 50 to 98% by weight based on the total composition including the solvent.

The reflection-preventive coating composition can be prepared according to procedures customarily adopted for many resin paints, and customary coating methods can be adopted, as long as a thin film can be formed on an objective article. Dip coating, spin coating and gravure printing methods are especially preferably adopted, because thin films having a smooth surface and a small haze can be thus obtained.

The coating film can be cured under appropriate conditions according to customary procedures, if necessary.

The surface coating formed from the reflection-preventive composition of the present invention has a superior reflection-preventing effect, a smooth surface, and a small haze. Moreover, the hardness and strength are high and the coating has a high scratch resistance. The pencil hardness of the conventional vacuum deposition film of MgF₂ formed on a plastic substrate is about 3H or 4H at highest. In contrast, the coating film obtained from the composition of the present invention has a pencil hardness larger than 4H.

The first type of the coating composition of the present invention is characterized in that the amount of the tetraalkoxysilane acting as the binder is small and the average particle diameter of fine particles of MgF₂ is small. It is considered that the reason why excellent effects can be attained with respect to the hardness, strength and the like by these characteristic features is probably as follows. Namely, if the amount of the tetraalkoxysilane is large, the film is hard but brittle, and if the article to be coated is soft, the silane film having a high elastic modulus cannot follow a deformation of the support. In contrast, if the amount incorporated of the tetraalkoxysilane in small, as in the composition of the present invention, the adhesive layer becomes an aggregate of fine joint points connecting fine particles of MgF₂ to one another and thus, the flexibility is improved and since the particles of MgF₂ become very close to one another, the adhesive force by the van der Waals force among the MgF₂ particles is increased.

The present invention will now be described with reference to the following examples.

In the examples, the surface reflectance was measured by a spectrophotometer, and the surface hardness (pencil hardness) was determined to JIS K-5400 and K-5401.

### Example 1

In a ball mill, 3 g of MgF₂ having an average particle size of 150 angstroms (the majority particles having a particle diameter of from 50 to 250 angstroms), 5 g of tetraethoxysilane, 0.1 g of concentrated hydrochloric acid, 3 g of water, and 88 g of ethanol were mixed and stirred to obtain a reflection-preventive coating composition having a pH value of 2. The formed composition was coated on a hard-coated plate of ethylene glycol bisallyl carbonate (CR39) by the spin coating method and was heated at 120°C for 5 minutes to obtain a coating film having a thickness of 1 µm.

The pencil hardness of the coating film was 7H, and the visible ray reflectance was 1.8%. The pencil hardness of CR39 not coated with the reflection-preventive film was 4H, and the visible ray reflectance was 9.2%.

### Comparative Example 1

MgF₂ was coated on a CR-39 substrate by the vacuum deposition according to customary procedures to form a film having a thickness of 0.1 µm. The surface reflectance was 2.5%, but the adhesion was poor and the film was readily peeled.

### Example 2

A reflection-preventive coating composition having a pH value of 2 was prepared in the same manner as described in Example 1 by mixing 1 part by weight of MgF₂ having an average particle diameter of 150 angstroms (the majority of particles having a diameter of from 100 to 200 angstroms), 0.9 part by weight of tetraethoxysilane, 0.1 part by weight methyltrimethoxysilane, 0.15 part by weight of dimethyldimethoxysilane, 0.03 part by weight of hydrochloric acid, 1 part by weight of water, and 29 parts by weight of ethanol. The coating composition was coated on a methacrylic resin plate by the dipping method and heated at 100°C for 5 minutes to obtain a film having a thickness of 0.1 µm.

The reflectance was 2.0%, and the pencil hardness was 6H.

### Example 3

A reflection-preventive coating composition having a pH value of 1.5 was prepared in the same manner as described in Example 1 by mixing 3 g of MgF₂ having an average particle diameter of 150 angstroms (the majority of particles having a diameter of from 50 to 250 angstroms), 5 g of tetraethoxysilane, 0.1 g of concentrated hydrochloric acid, 3 g of water, and 88 g of ethanol. The coating composition was coated on a washed soda glass sheet by the dipping method, and heated at 160°C for 5 minutes to form a coating film having a thickness of 0.1 µm.

The pencil hardness was 9H and the visible ray reflectance was 1.8%. The surface hardness of the soda glass substrate not coated with the reflection-preventive coating composition was 9H and the visible ray reflectance was 8.0%.

### Example 4

A mixture comprising 23 parts by weight of ethyl silicate, 8 parts by weight of water, 0.1 part by weight of concentrated hydrochloric acid, and 69 parts by weight of ethanol was heated at 40°C for 60 minutes to partially hydrolyze ethyl silicate, and the reaction mixture was mixed with 6.6 parts by weight of MgF₂ having a particle diameter of 50 to 100 angstroms supplied by Sumitomo Cement, and 350 parts by weight of ethanol to form a reflection-preventive coating composition having a pH value of 2.

The coating composition was dip-coated on the front and back surfaces of a front glass sheet having a reflectance of 8% for a showcase, a front glass sheet having a reflectance of 8% for a picture frame, and a front glass sheet having a reflectance of 7% for a wall clock, and was then heated at 250°C for 1 hour to form films having thickness of 110 nm, 105 nm and 98 nm, respectively. The reflectances of these films were as low as 4.0%, 4.2% and 3.8%, respectively, and in each of the coated glass sheets, the dazzling by the reflection from the glass surface was reduced.

The same coating composition was coated on a front surface having a reflectance of 4.0% of a TV Braun tube by the dip coating method and heated at 160°C for 20 minutes to form a film having a thickness of 115 nm and a reflectance of 2%. By visual observation, it was clearly confirmed that the reflection of rays from a fluorescent lamp was reduced.

### Example 5

By a sand grinder mill, 30 g of MgF₂ having an average particle diameter of 150 angstroms (the majority of particles having a particle diameter distributed in the range of from 50 to 200 angstroms), 104 g of tetraalkoxysilane, 0.25 g of concentrated hydrochloric acid, 6.1 g of mathyltrimethoxysilane, and 860 g of ethanol were mixed and subjected to a dispersion treatment for 1 hour to obtain a reflection-preventive coating composition having a pH value of 2. An inorganic glass sheet was immersed in the obtained composition and drawn up therefrom at a constant speed of 10 cm/min in an atmosphere maintained at a temperature of 23°C and a relative humidity of 50%, the coated glass sheet was dried at 80°C and the coating was baked at 300°C for 1 hour.

The thickness of the obtained coating was 0.1 µm and the transmission was 96.5%. The pencil hardness of the coating film was 7H. In contrast, the transmission of the uncoated glass sheet was 92%.

### Example 6

In a ball mill, 0.3 part by weight of a polyester resin (Water Sol S-123 supplied by Dainippon Ink and Chemicals), 7 parts by weight of MgF₂ having an average particle diameter of 150 angstroms (the majority of particles having a diameter distributed in the range of from 50 to 250 angstroms) and 40 parts by weight of a methyl ethyl ketone/toluene mixed solvent (50/50 mixing weight ratio) were mixed and stirred to obtain a coating composition. The obtained coating composition was coated on a transparent plate of a methacrylic resin by the dipping method to form a coating film having a dry thickness of 0.1 µm.

The surface reflectance was 8% before the coating but was reduced to about 3% after the coating.

### Example 7

A coating composition was prepared by stirring overnight 3 parts by weight of MgF₂ having an average particle diameter of 150 angstroms (the majority of particles having a diameter distributed in the range of from 50 to 250 angstroms), 1.5 parts by weight of a water-soluble acrylic resin (Water Sol S744 supplied by Dainippon Ink and Chemicals), and 100 parts by weight of isopropyl alcohol by using a ball mill.

The coating composition was coated on an acrylic resin plate by the dipping method and the coated plate was dried at 120°C for 10 minutes to form a film having a thickness of 0.1 µm.

The surface hardness was 5H and the surface reflectance was 3.2%. The uncoated acrylic resin sheet was found to have a surface hardness of HB and a surface reflectance of 8%.

### Example 8

A coating composition was prepared by stirring 4 g of MgF₂ having an average particle diameter of 150 angstroms (the majority of particles having a diameter distributed in the range of from 50 to 250 angstroms), 1 g of a melamine resin (Water Sol S-683-lM supplied by Dainippon Ink and Chemicals), 1 g of an acrylic resin (Water Sol S-732 supplied by Dainippon Ink and Chemicals), and 200 g of isopropyl alcohol for 10 hours by a ball mill.

The obtained coating composition was spin-coated on an acrylic resin plate and the coated plate was dried at 130°C for 15 minutes to form a film having a thickness of 0.1 µm.

The surface hardness was 6H and the surface reflectance was 2.8%. The uncoated acrylic resin plate was found to have a surface hardness of HB and a surface reflectance of 8%.

### Comparative Example 2

A coating composition was prepared in the same manner as described in Example 6 except that MgF₂ having an average particle diameter of 5000 angstroms was used instead of MgF₂ used in Example 6. The coating composition was dip-coated on an acrylic resin plate and the coated plate was dried at 120°C for 10 minutes to form a film having a thickness of 0.1 µm.

The surface hardness was 5H and the surface reflectance was 7%, but the film was white and turbid.

### Example 9

A reflection-preventive coating composition was prepared by mixing 100 parts by weight of an aqudic resin supplied by Dainippon Ink, 360 parts by weight of toluene, and 40 parts by weight of ultrafine particles of MgF₂ having a particle diameter of 50 to 100 angstroms, supplied by Sumitomo Cement, for 60 minutes by a sand mill and subjecting the mixture to a dispersion treatment by ultrasonic waves having an output of 1200 W for 20 minutes.

The obtained coating composition was spin-coated on the surface of an automobile dashboard (a transparent polycarbonate cover having a reflectance of 4% on one surface) and the coated board was heated at 120°C for 60 minutes to obtain a coating film having a thickness of 120 nm. The reflectance of the coated dashboard was 2% on one surface, and the reflected rays from the dashboard were reduced and meters could be seen more clearly than before the coating.

### Example 10

A reflection-preventive coating composition was prepared by mixing 100 parts by weight of a Vyron resin supplied by Toyobo with 50 parts by weight of methyl ethyl ketone, 50 parts by weight of toluene, and 10 parts by weight of powdery MgF₂ having a particle diameter of 50 to 100 angstroms, supplied by Sumitomo Cement, for 60 minutes by a sand mill and subjecting the mixture to a dispersion treatment by ultrasonic waves having an output of 1200 W for 25 minutes by using an ultrasonic dispersing machine.

The obtained coating composition was dip-coated on a polycarbonate plate (reflectance = 8%) and the coated plate was heated and dried at 120°C for 60 minutes to obtain a coating film having a thickness of 105 nm. The reflectance was 4%. Thus, it was confirmed that the reflectance characteristics were improved.

### INDUSTRIAL APPLICABILITY

AS the glass or plastic article on which the reflection-preventive film of the present invention is to be formed, there can be mentioned, for example, windowpanes and front glass sheets of automobiles, ships and airplanes, Braun tubes, front glass sheets and plastic sheets of CRT and TV, glass sheets and plastic sheets of liquid crystal devices and meters, exhibit-protecting glass sheets for show windows and display cases in museums and art galleries, glass sheets and plastic sheets of clocks, spectacle lenses and camera lenses, and glass sheets and plastic sheets of solar cells.

## Claims

1. A reflection-preventive coating composition comprising 1 part by weight of MgF₂ having an average particle diameter not larger than 500 angstroms, 0.5 to 1.5 parts by weight of a tatraalkoxysilane, 0.1 to 1.0 part by weight of water, and 30 to 50 parts by weight of a monohydric alcohol having 1 to 4 carbon atoms, wherein the pH value of the composition is adjusted to 1 to 4.

2. A reflection-preventive coating composition as set forth in claim 1, wherein the tetraalkoxysilane is selected from the group consisting of tetramethoxysilane, tetraethoxysilane, tetrapropoxysilane, and tetrabutoxysilane.

3. A reflection-preventive coating composition as set forth in claim 1 or 2, which further comprises at least one compound selected from the group consisting of alkyltrialkoxysilanes and dialkyldialkoxysilanes in an amount of 0.05 to 0.5 part by weight per part by weight of MgF₂.

4. A reflection-preventing coating composition as set forth in claim 3, wherein the alkyltrialkoxysilane or dialkyldialkoxysilane has 1 to 4 carbon atoms in each of the alkyl and alkoxy groups.

5. A reflection-preventive coating composition as set forth in any of claims 1 through 4, wherein the average particle diameter of MgF₂ is 400 to 10 angstroms.

6. A reflection-preventive coating composition as set forth in any of claims 1 through 4, wherein the average particle diameter of MgF₂ is 200 to 50 angstroms.

7. A reflection-preventive coating composition as set forth in any of claims 1 through 6, wherein the amount of the tetraalkoxysilane is 0.7 to 1.0 part by weight per part by weight of MgF₂.

8. A reflection-preventive coating composition as set forth in any of claims 1 through 7 wherein the amount of water is 0.25 to 0.50 part by weight per part by weight of MgF₂.

9. A reflection-preventive coating composition comprising 50 to 2 parts by weight of a solid component comprising, based on the solid component, 5 to 50% by weight of an organic resin binder and 95 to 50% by weight of MgF₂ particles having an average particle diameter not larger than 500 angstroms, and 50 to 98 parts by weight of an organic solvent capable of dissolving the binder therein.

10. A reflection-preventive coating composition as set forth in claim 9, wherein the average particle diameter of MgF₂ is 400 to 10 angstroms.

11. A reflection-preventive coating composition as set forth in claim 9, wherein the average particle diameter of MgF₂ is 200 to 50 angstroms.

12. A reflection-preventive coating composition as set forth in any of claims 9 through 11, wherein the solid component comprises 15 to 20% by weight of the organic resin binder and 80 to 85% by weight of the MgF₂ particles.

13. A process for the preparation of a glass or plastic article having a reflection-preventive film, which comprises coating the surface of a glass or plastic article with a reflection-preventive coating composition as net forth in any of claims 1 through 12.

14. A glass or plastic article having a reflection-preventive film, which is prepared according to a preparation process as set forth in claim 13.

## Patentansprüche

1. Reflexionsverhindernde Beschichtungsmasse, umfassend 1 Gew.-Teil MgF₂ eines durchschnittlichen Teilchendurchmessers von nicht mehr als 500 Å, 0,5 - 1,5 Gew.-Teil(e) Tetraalkoxysilan, 0,1 - 1,0 Gew.-Teil Wasser und 30 - 50 Gew.-Teile eines einwertigen Alkohols mit 1 - 4 Kohlenstoffatom(en), deren pH-Wert auf 1 - 4 eingestellt ist.

2. Reflexionsverhindernde Beschichtungsmasse nach Anspruch 1, wobei das Tetraalkoxysilan aus der Gruppe Tetramethoxysilan, Tetraethoxysilan, Tetrapropoxysilan und Tetrabutoxysilan ausgewählt ist.

3. Reflexionsverhindernde Beschichtungsmasse nach Anspruch 1 oder 2, die weiterhin zumindest eine Verbindung aus der Gruppe Alkyltrialkoxysilane und Dialkyldialkoxysilane in einer Menge von 0,05 - 0,5 Gew.-Teil pro Gew.-Teil MgF₂ enthält.

4. Reflexionsverhindernde Beschichtungsmasse nach Anspruch 3, wobei das Alkyltrialkoxysilan oder Dialkyldialkoxysilan 1 - 4 Kohlenstoffatom(e) in jeder der Alkyl- und Alkoxygruppen aufweist.

5. Reflexionsverhindernde Beschichtungsmasse nach einem der Ansprüche 1 bis 4, wobei der durchschnittliche Teilchendurchmesser von MgF₂ 400 - 10 Å beträgt.

6. Reflexionsverhindernde Beschichtungsmasse nach einem der Ansprüche 1 bis 4, wobei der durchschnittliche Teilchendurchmesser von MgF₂ 200 - 50 Å beträgt.

7. Reflexionsverhindernde Beschichtungsmasse nach einem der Ansprüche 1 bis 6, wobei die Menge des Tetraalkoxysilans 0,7 - 1,0 Gew.-Teil pro Gew.-Teil MgF₂ beträgt.

8. Reflexionsverhindernde Beschichtungsmasse nach einem der Ansprüche 1 bis 7, wobei die Wassermenge 0,25 - 0,50 Gew.-Teil pro Gew.-Teil MgF₂ beträgt.

9. Reflexionsverhindernde Beschichtungsmasse, umfassend 50 - 2 Gew.-Teile einer festen Komponente, umfassend, bezogen auf die feste Komponente, 5 - 50 Gew.-Teile eines organischen Harzbindemittels und 95 - 50 Gew.-Teile MgF₂-Teilchen eines durchschnittlichen Teilchendurchmessers von nicht mehr als 500 Å, sowie 50 - 98 Gew.-Teile eines organischen Lösungsmittels mit der Fähigkeit zum Auflösen des Bindemittels.

10. Reflexionsverhindernde Beschichtungsmasse nach Anspruch 9, wobei der durchschnittliche Teilchendurchmesser von MgF₂ 400 - 10 Å beträgt.

11. Reflexionsverhindernde Beschichtungsmasse nach Anspruch 9, wobei der durchschnittliche Teilchendurchmesser von MgF₂ 200 - 50 Å beträgt.

12. Reflexionsverhindernde Beschichtungsmasse nach einem der Ansprüche 9 bis 11, wobei die feste Komponente 15 - 20 Gew.-% des organischen Harzbindemittels und 80 - 85 Gew.-% der MgF₂-Teilchen umfaßt.

13. Verfahren zur Herstellung eines Glas- oder Kunststoffgegenstands mit einem reflexionsverhindernden Film durch Beschichten der Oberfläche eines Glas- oder Kunststoffgegenstandes mit einer reflexionsverhindernden Beschichtungsmasse nach einem der Ansprüche 1 bis 12.

14. Glas- oder Kunststoffgegenstand mit einem reflexionsverhindernden Film, der nach dem Verfahren gemäß Anspruch 13 hergestellt ist.

## Revendications

1. Composition de revêtement antireflet comprenant une partie en poids de MgF₂ ayant un diamètre particulaire moyen non supérieur à 500 angstroms, 0,5 à 1,5 partie en poids de tétraalkoxysilane, 0,1 à 1,0 partie en poids d'eau et 30 à 50 parties en poids d'un alcool monohydrolyxé ayant 1 à 4 atomes de carbone, composition dans laquelle la valeur du pH de la composition est réglée à une valeur de 1 à 4.

2. Composition de revêtement antireflet selon la revendication 1, dans laquelle le tétraalkoxysilane est choisi dans le groupe constitué du tétraméthoxysilane, du tétraéthoxysilane, du tétrapropoxysilane et du tétrabutoxysilane.

3. Composition de revêtement antireflet selon la revendication 1 ou 2, qui comprend par ailleurs au moins un composé choisi dans le groupe constitué des alkyltrialkoxysilanes et des dialkyldialkoxysilanes à raison de 0,05 à 0,5 partie en poids par partie en poids de MgF₂.

4. Composition de revêtement antireflet selon la revendication 3, dans laquelle l'alkyltrialkoxysilane ou le dialkyldialkoxysilane a 1 à 4 atomes de carbone dans chacun des groupes alkyle et alkoxy.

5. Composition de revêtement antireflet selon l'une quelconque des revendications 1 à 4, dans laquelle le diamètre particulaire moyen du MgF₂ est de 400 à 10 angstroms.

6. Composition de revêtement antireflet selon l'une quelconque des revendications 1 à 4, dans laquelle le diamètre particulaire moyen du MgF₂ est de 200 à 50 angstroms.

7. Composition de revêtement antireflet selon l'une quelconque des revendications 1 à 6, dans laquelle la quantité de tétraalkoxysilane est de 0,7 à 1,0 partie en poids par partie en poids de MgF₂.

8. Composition de revêtement antireflet selon l'une quelconque des revendications 1 à 7, dans laquelle la quantité d'eau est de 0,25 à 0,50 partie en poids par partie en poids de MgF₂.

9. Composition de revêtement antireflet comprenant 50 à 2 parties en poids d'un composant solide comprenant, sur base du composant solide, 5 à 50 parties en poids d'un liant de résine organique et 95 à 50 parties en poids de particules de MgF₂ ayant un diamètre particulaire moyen qui n'est pas supérieur à 500 angstroms, et 50 à 98 parties en poids d'un solvant organique susceptible de dissoudre le liant.

10. Composition de revêtement antireflet selon la revendication 9, dans laquelle le diamètre particulaire moyen du MgF₂ est de 400 à 10 angstroms.

11. Composition de revêtement antireflet selon la revendication 9, dans laquelle le diamètre particulaire moyen du MgF₂ est de 200 à 50 angstroms.

12. Composition de revêtement antireflet selon l'une quelconque des revendications 9 à 11, dans laquelle le composant solide comprend 15 à 20 parties en poids du liant de résine organique et 80 à 85 parties en poids de particules de MgF₂.

13. Procédé de préparation d'un article de verre ou de matière plastique ayant un film antireflet, qui consiste à revêtir la surface d'un article de verre ou de matière plastique par une composition de revêtement antireflet selon l'une quelconque des revendications 1 à 12.

14. Article de verre ou de matière plastique ayant un film antireflet, qui est préparé par un procédé de préparation selon la revendication 13.
